# EUROPEAN PATENT APPLICATION

(11) **EP 4 660 469 A1**
(43) Date of publication of application: **10.12.2025**
(21) Application number: 25305809.3
(22) Date of filing: 03.06.2025
(51) Int. Cl.: F16B 15/08

(54) **STRIP OF FASTENERS**

(30) Priority: 05.06.2024 FR 2405932
(71) Applicant: Illinois Tool Works Inc., Glenview, IL 60025 (US)
(72) Inventor: LEJAULT, David, Glenview, Illinois, 60025 (US); PERRIER, Matthieu, Glenview, Illinois, 60025 (US)
(74) Representative: HGF

(57) **Abstract**

The invention relates to a strip (1, 101, 201, 301, 401, 501, 601, 701) of fasteners comprising a holder (2, 102, 202, 302, 402, 502, 602, 702) with a plurality of sleeves (3, 103, 203, 303, 403, 503, 603, 703) frangibly connected between them and a carrier (4, 104, 204, 304, 404, 504, 604, 704) connected to each sleeve (3, 103, 203, 303, 403, 503, 603, 703) for holding an elongated piece (5). Each sleeve (3, 103, 203, 303, 403, 503, 603, 703) holds a fastener (6, 106, 206, 306, 406, 506, 606, 706) so that when the fastener (6, 106, 206, 306, 406, 506, 606, 706) is driven into a substrate (S) by a driving tool (10), the fasteners (6, 106, 206, 306, 406, 506, 606, 706) secure the sleeve (3, 103, 203, 303, 403, 503, 603, 703) and its carrier (4, 104, 204, 304, 404, 504, 604, 704) to the substrate (S).

## Description

### Technical field of the invention

The present invention generally relates to strips of fasteners, such as nails or drive pins, for a fastener driving tool.

### Technical background

Fastener driving tools, which can be pneumatic, combustion-powered, or electric, are widely used to drive fasteners having an elongated shank with a pointed end and a head. Such fasteners are generally designed to be driven forcefully through a workpiece into a substrate. These fasteners include nails designed to be driven into wood and driving pins designed to be driven into concrete or masonry. In general, the shank of such a driving pin comprises an outwardly flared portion at the point where the shank is joined to the head. In particular, these driving pins are used to secure metal rails, which are used to mount plasterboard walls or other metal parts onto concrete substrates.

Many fastener driving tools require that the fasteners be fed in strips, on which the fasteners are assembled in magazines equipped with feed mechanisms for the assembled strips of fasteners. Typically, these fasteners are assembled using holders molded with polymers, such as polypropylene, with individual holders, such as sleeves or sockets, for the respective fasteners, and with frangible links between the successive sleeves, sockets or holders.

US5069340 describes such strips of fasteners.

### Summary of the invention

It would be useful to provide a more useful strip for fasteners than such conventional strips.

It would be useful to provide a strip of fasteners that are mutually compatible with one another when holding an elongated piece.

The invention relates to a strip of fasteners comprising a plurality of fasteners frangibly connected between them and a carrier connected to each fastener so that when the fastener is driven into a substrate by a driving tool, the fastener secures the carrier to the substrate to enable it to hold an elongated piece.

The invention therefore makes it possible to fasten elongated pieces, such as pipes and cable ducts, to a wall, floor or ceiling with no need for a separate fastening device.

The strip of fasteners can comprise a holder for holding the fasteners. The holder can comprise at least one sleeve. The holder can comprise several sleeves, which can be frangibly connected between them. A carrier can be connected to each sleeve. Each sleeve can hold a fastener, for example so that when the fastener is driven into a substrate by a driving tool, the fastener secures the sleeve and its carrier to the substrate.

The invention also relates to a strip of fasteners comprising a holder with a plurality of sleeves frangibly connected between them and a carrier connected to each sleeve for holding an elongated piece (such as a tube or cable duct), in which each sleeve holds a fastener so that when the fastener is driven into a substrate by a driving tool, the fastener secures the sleeve and its carrier to the substrate.

The plurality of sleeves can include at least a first sleeve and a second sleeve. The first sleeve holds a first fastener and has a first carrier. The second sleeve holds a second fastener and has a second carrier. The first carrier can include an first anchoring element configured so that, once the second fastener is driven into the substrate, the first anchoring element engages the second carrier to hold the elongated piece.

The second carrier may include a second anchoring element. The first anchoring element and second anchoring element may be configured to cooperatingly couple together.

The first anchoring element may include at least one receiving formation. The second anchoring element may include at least one projecting portion configured to couple with the at least one receiving formation.

Each of the first anchoring element and the second element may include both a receiving formation and a projecting formation. In this way, each anchoring element is the same.

The anchoring element may include a mutually-engaging formation. That is, each anchoring element may include a formation suitable to engage with a matching formation. For example, each anchoring member may include a slot formation or a hook formation configured to couple to one another when arrange on opposing sides of an elongated piece.

An anchoring element of a first fastener may be configured to be secured by a second fastener when the second fastener is driven into the substrate. That is, each anchoring element may include a formation to engage a fastener of a subsequent fastener as the subsequent fastener is driven into the substrate. The formation may be an aperture on a carrier.

At least one or each carrier can comprise an arm. The arm can protrude, for example radially, from the sleeve.

More specifically, each carrier can comprise an arm protruding radially from the sleeve.

At least one, or each, arm can be configured to fit at least partially over and/or around the elongated piece.

More specifically, each arm can be configured to fit at least partially over and/or around the elongated piece.

Typically, the, or each, arm fits at least partially over and/or around a lateral portion of the elongated piece.

At least one or each arm can be curved, for example to form a concave seat enabling the elongated piece to be engaged.

More specifically, each arm can be curved to form a concave seat enabling the elongated piece to be engaged.

The concave seat of at least one or each arm can be on a side of the arm facing the substrate. The arm can be configured to exert, when in use, a pressing force to hold the elongated piece against the substrate.

More specifically, the concave seat of each arm can be located on a side of the arm facing the substrate, the arm being configured to exert, when in use, a pressing force to hold the elongated piece against the substrate.

At least one or each arm can comprise a lip at or near its free end. The lip can protrude towards the substrate, for example to laterally retain the elongated piece.

More specifically, each arm can comprise a lip at or near its free end which protrudes towards the substrate to laterally retain the elongated piece.

At least one or each carrier can comprise a hooked member. The hooked member can comprise a C-clip.

The hooked member can be for engaging, for example releasably, the elongated piece. Typically, the hooked member can be for engaging a lengthwise portion of the elongated piece.

More specifically, each carrier can comprise a hooked member, such as a C-clip, for releasably engaging the elongated piece.

The hooked member, such as a C-clip, can protrude from the arm, for example on its side opposite the concave seat.

More specifically, the hooked member, such as a C-clip, can protrude from the arm on its side opposite the concave seat to releasably engage an elongated piece.

The invention also relates to an accessory for fastening an elongated piece comprising a sleeve and an arm projecting radially from the sleeve, the arm being curved to form a concave seat and having a hooked member, such as a C-clip, projecting from the arm on its side opposite the concave seat, in which the sleeve is configured to hold a fastener so that when the fastener is driven into a substrate, the fastener secures the accessory to the substrate so the hooked portion can releasably engage with an elongated piece or so the arm can fit at least partially over or around an elongated piece so as to exert a pressing force to hold the elongated piece against the substrate.

At least one or each carrier can comprise a pair of curved arms. Together, the curved arms can form the hooked portion, such as the C-clip, for example when the fastener is driven into the substrate.

More specifically, each carrier can comprise a pair of curved arms which, together, form hooked portion, such as the C-clip, when the fastener is driven into the substrate.

The curved arms can be located on opposite sides of the sleeve.

The hooked portion, such as the C-clip, can protrude, when in use, away from the substrate so that at least one portion of the hooked portion, or C-clip, is located between the elongated piece and the substrate.

At least one or each arm can comprise a strap. The or each strap can have an anchoring element, for example to wrap it or them securely around the elongated piece.

More specifically, each arm can comprise a strap with an anchoring element for securely wrapping it around the elongated piece.

The strap can comprise one or more teeth. The anchoring element can comprise a pawl, for example to engage the tooth or teeth on the strap.

More specifically, the anchoring element can comprise a pawl to engage teeth on the strap.

The anchor can comprise a hole. The hole can be in a free end of the strap. The fastener can be driven through the hole.

More specifically, the anchoring element can comprise a hole in a free end of the strap through which the fastener is to be driven.

The holder can be molded from polymers. At least one or each sleeve can be at least partially bendable, for example when the fastener is driven into a substrate. The sleeve can provide an annular portion, which can be trapped between a fastener head and the substrate to which the carrier is attached.

More specifically, the holder can be molded from polymers, in which each sleeve is at least partially bendable when the fastener is driven into a substrate, the sleeve providing an annular portion trapped between a fastener head and the substrate to which the carrier is attached.

The arm can be made of metal and connected to the holder, which can be overmolded with a polymer. The lip and the clip can be overmolded on the arm if it is made of metal.

This enables the arm, holder, lip and clip to have varying degrees of rigidity and strength.

For the avoidance of doubt, all the features described herein also apply to any aspect of the invention.

In order to avoid any ambiguity, the terms "can", "and/or", "for example", and any other similar term used in the present document are to be interpreted as not limiting, such that any feature thus described is not necessarily required to be present.

### Brief description of the figures

Other features and advantages of the invention will become apparent from the following detailed description, which will be understood in reference to the appended drawings, in which:
[Fig. 1] Figure 1 illustrates a strip of fasteners according to a first example;
[Fig. 2] Figure 2 illustrates one of the fasteners on the strip in Figure 1 being driven into a floor so that the carrier is secured to the floor and holds a pair of cables;
[Fig. 3] Figure 3 illustrates a side view of one of the fasteners on the strip in Figure 1 driven into a groove in a wall, so that the carrier is secured in the groove and a cable is held in its C-clip;
[Fig. 4] Figure 4 illustrates a front view of the assembly as illustrated in Figure 3;
[Fig. 5] Figure 5 illustrates a driving tool for driving in the fasteners on the strip in Figure 1;
[Fig. 6] Figure 6 illustrates a strip of fasteners according to a second example;
[Fig. 7] Figure 7 illustrates one of the fasteners on the strip in Figure 6 being driven into a floor so that the carrier is secured to the floor and holds a pair of cables;
[Fig. 8] Figure 8 illustrates a strip of fasteners according to a third example;
[Fig. 9] Fig. 9 illustrates a side view of one of the fasteners on the strip in Figure 8;
[Fig. 10] Figure 10 illustrates a side view of one of the fasteners on the strip in Figure 8 driven into a groove in a wall, so that the carrier is secured in the groove and a cable is held in its C-clip;
[Fig. 11] Figure 11 illustrates a strip of fasteners according to a fourth example;
[Fig. 12] Figure 12 illustrates one of the fasteners on the strip in Figure 11 being driven into a floor so that the carrier is secured to the floor and and a cable is held in its C clip;
[Fig. 13] Figure 13 illustrates a strip of fasteners according to a fifth example in which the carrier at the end of the strip is wound around an elongated piece;
[Fig. 14] Figure 14 illustrates a strip of fasteners according to a sixth example;
[Fig. 15] Fig. 15 illustrates a side view of one of the fasteners on the strip in Figure 14;
[Fig. 16] Figure 16 illustrates one of the fasteners on the strip in Figure 14 being driven into a floor so that the carrier is secured to the floor and and a cable is held in its carrier;
[Fig. 17A - 17B] illustrate a first fastener and a second fastener of a strip of fasteners capable of coupling together;
[Fig. 18A - 18J] illustrate a range of anchoring elements for use in the fasteners of Figures 17A and 17B; and
[Fig. 19A - 19B] illustrate a strip of fasteners in strip format, and secured in series to a number elongated pieces.

### Detailed description of the invention

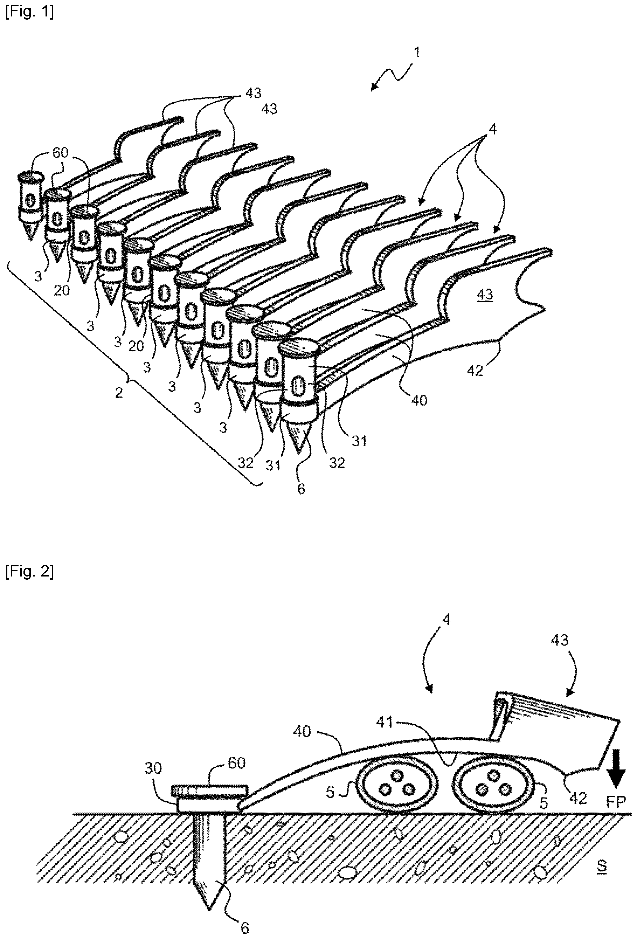

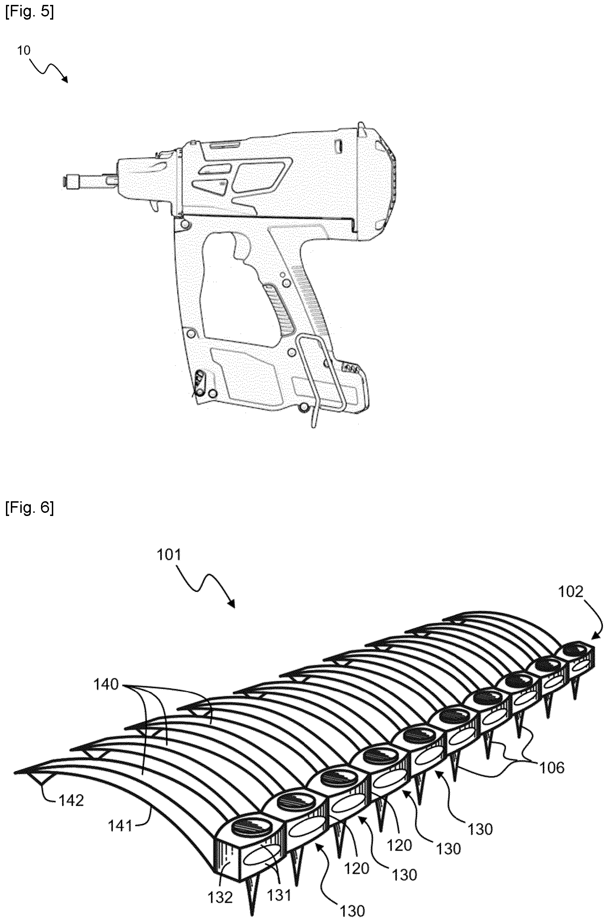

Referring now to Figures 1 to 5, a strip 1 of fasteners 6 comprising a holder 2 with several sleeves 3 frangibly connected between them by breakaway connectors 20 can be seen. Each sleeve 3 comprises a carrier 4 connected to it to hold an elongated piece 5. Each sleeve 3 holds a fastener 6 so that when the fastener 6 is driven into a substrate S by a driving tool 10 (see Figure 5), the fastener 6 secures the sleeve 3 and its carrier 4 to the substrate S (see Figures 2 to 4).

The holder 2 is molded in polymer and each sleeve 3 is bendable when the fastener 6 is driven into a substrate S. More specifically, each sleeve 3 comprises a pair of spaced rings 31 connected by a pair of connectors 32. When the fastener 6 held in the sleeve 3 is driven into a substrate S, the connectors 32 collapse and the spaced rings 31 are forced together to provide an annular portion 30 trapped between a head 60 of the fastener 6 and the substrate S.

The design of the sleeves 3 can be similar to the one described in US5069340, but they can also have a different configuration.

Each carrier 4 comprises an arm 40 that protrudes radially from the sleeve 3. The arm 40 is curved to form a concave seat 41 enabling the elongated piece 5 to be engaged. The curve of the arm 40 is facing the substrate S, such that the concave seat 41 of each arm 40 is located on a side of the arm 40 facing the substrate S.

In this way and as shown in Figure 2, the arm 40 is configured to exert, when in use, a pressing force FP to hold one or more elongated pieces 5 against the substrate S. Each arm 40 also comprises a lip 42 at or near its free end. The lip 42 protrudes towards the substrate S to laterally retain the elongated piece 5.

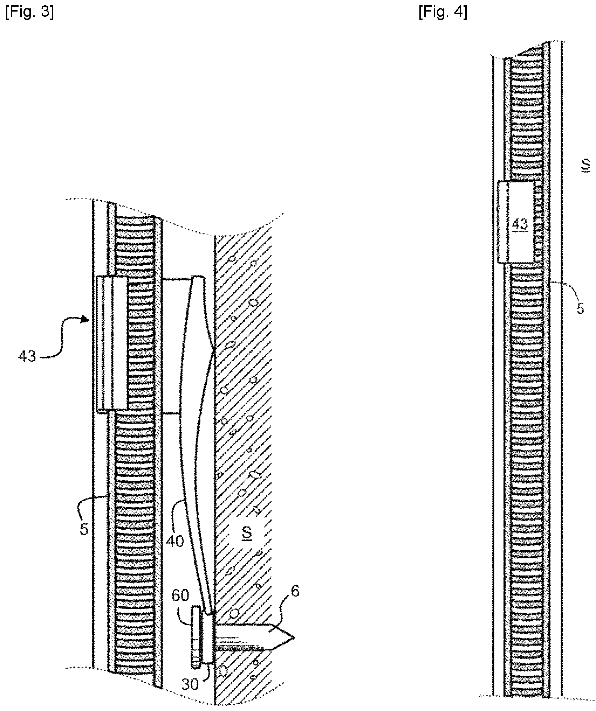

In this example, each carrier 4 comprises a hooked member. The hooked member is formed as a C-clip 43 that protrudes from the arm 40 on its side opposite the concave seat 41. The C-clip 43 extends over a portion of the length of the arm 40. The carrier 4 can thus be installed inside a groove in a wall or other substrate S, and extend along this groove, with the C-clip 43 holding an elongated piece 5 inside the groove. This is illustrated in Figures 3 and 4.

More specifically, the C-clip 43 protrudes from the substrate S, so that the arm 40 and a portion of the C-clip 43 are both located between the elongated piece 5 and the substrate S. As a result, the fasteners 6 and virtually the entire carrier 4 are concealed behind the elongated piece 5.

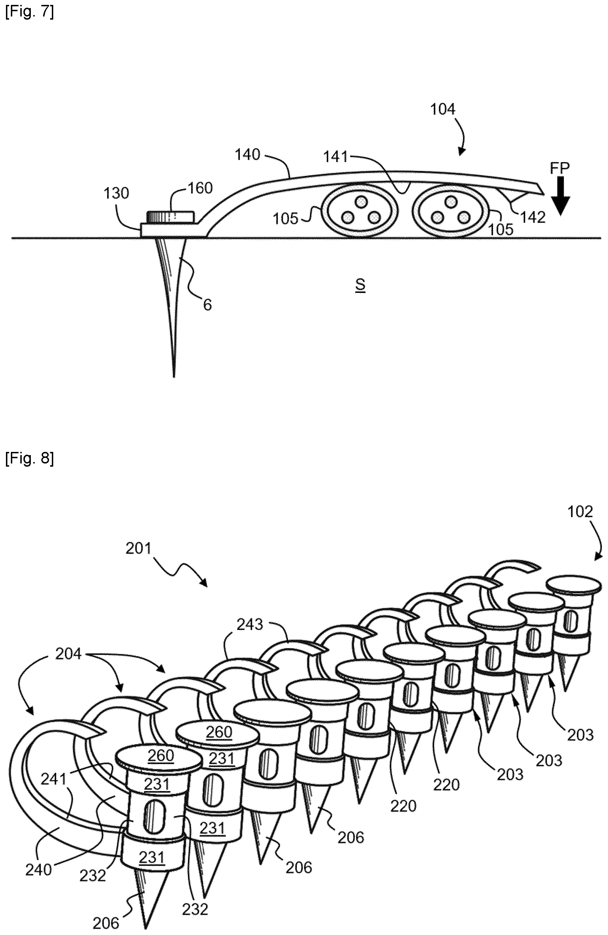

Figures 6 and 7 show a strip 101 of fasteners 106 according to another example similar to the strip 1 of fasteners 106 in Figures 1 to 4, in which similar references represent similar features, incremented by 100. The strip 101 of fasteners 106 in this example differs from the one shown in Figures 1 to 4 by the absence of the C-clip 43.

Figures 8 to 10 show a strip 201 of fasteners 206 according to another example similar to the strip 1 of fasteners 6 in Figures 1 to 4, in which similar references represent similar features, incremented by 200. The strip 201 of fasteners 206 in this example differs from the one shown in Figures 1 to 4 in that the curve of the arm 240 is facing away from the substrate S and forms a hooked member 243, such as a C-clip, so that the concave seat 241 is on a side of the arm 240 facing away from the substrate S.

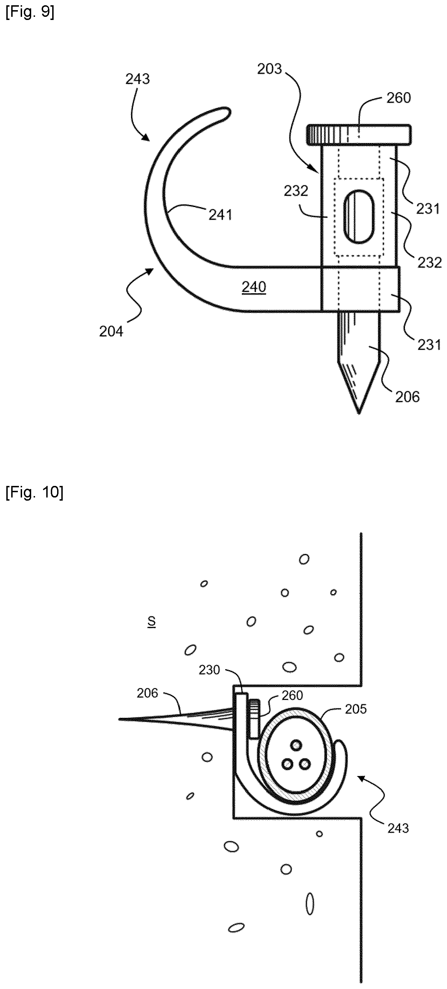

This example provides a simple hooked member 243 for holding an elongated piece 5 against a substrate S or inside a groove in the substrate S, as illustrated in Figure 10. This arrangement can be useful for holding elongated pieces 5 that run along horizontal grooves in walls, for example.

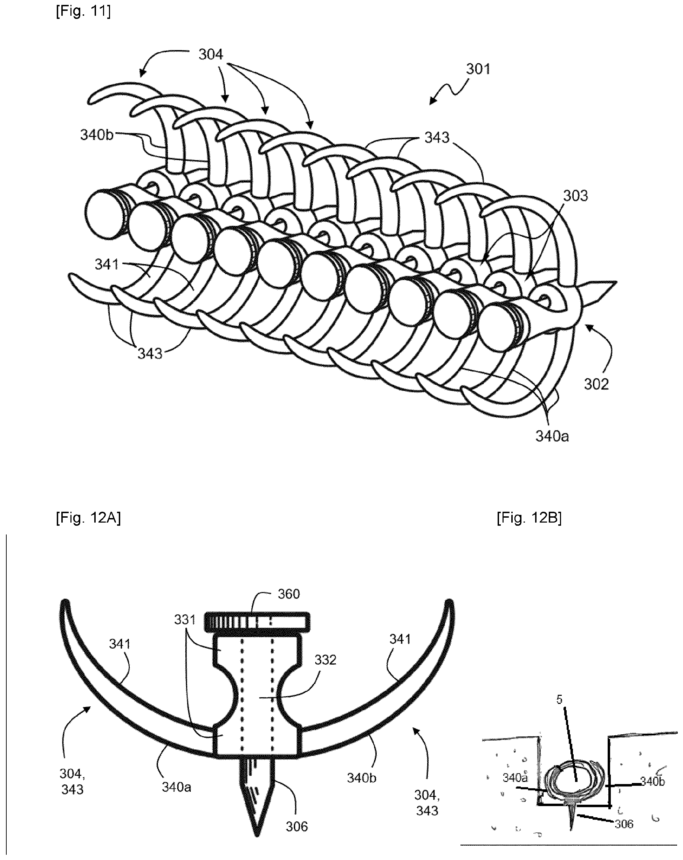

Figures 11 and 12 show a strip 301 of fasteners 306 according to another example similar to the strip 201 of fasteners 206 in Figures 8 to 10, in which similar references represent similar features, incremented by 100. The strip 301 of fasteners 306 in this example differs from the one shown in Figures 8 to 10 in that it comprises a pair of curved arms 340a, 340b on opposite sides of the sleeve 303.

Together, the curved arms 340a, 340b form the hooked member 343 when fastener 306 is driven into substrate S. Figure 12 shows the hooked member 343 holding an elongated piece 5 when the fastener 306 is driven into the substrate S.

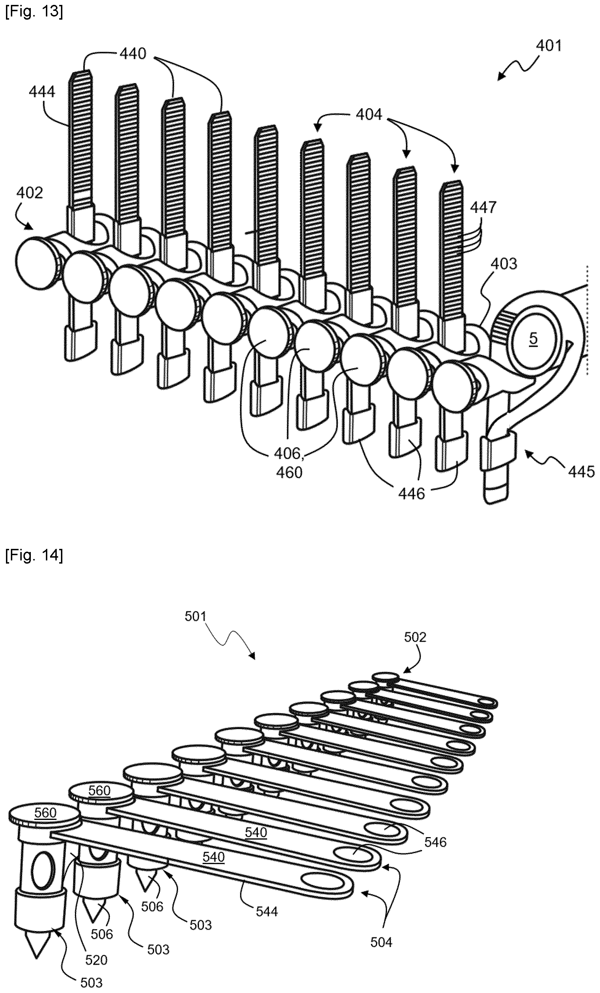

Figure 13 shows a strip 401 of fasteners 406 according to another example similar to the strip 201 of fasteners 206 in Figures 8 to 10, where similar references represent similar features, incremented by 200. The strip 401 of fasteners 406 in this example differs from the one shown in Figures 8 to 10 in that each arm 440 comprises a strap 444 with an anchoring element 445 for securely wrapping it around the elongated piece 5.

More specifically, the anchoring element 445 comprises a pawl 446 that engages teeth 447 on the strap 444 in the manner of a clamp ring.

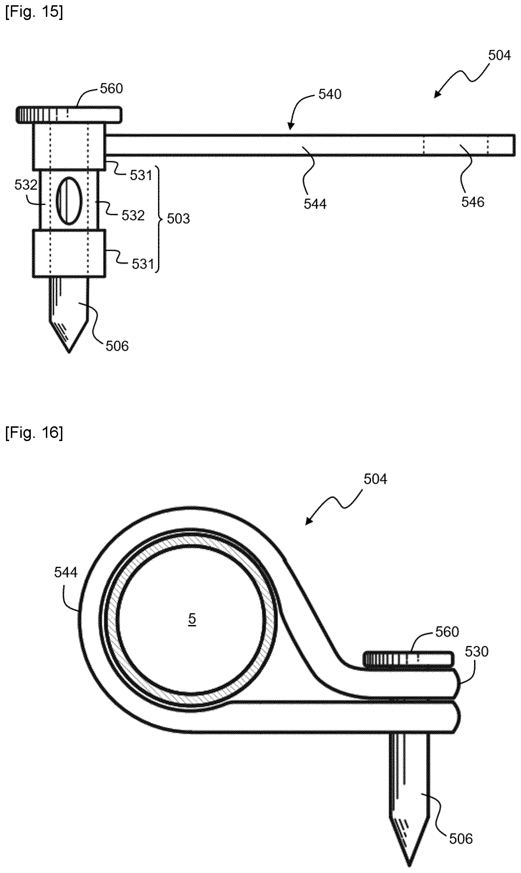

Figures 14 to 16 show a strip 501 of fasteners 506 according to another example similar to the strip 401 of fasteners 406 in Figure 14, in which similar references represent similar features, incremented by 100. The strip 501 of fasteners 506 in this example differs from the one shown in Figure 14 in that the strap 544 comprises an anchoring element 545 in the form of a hole 546 in its free end 547 through which the fastener 5 is to be driven.

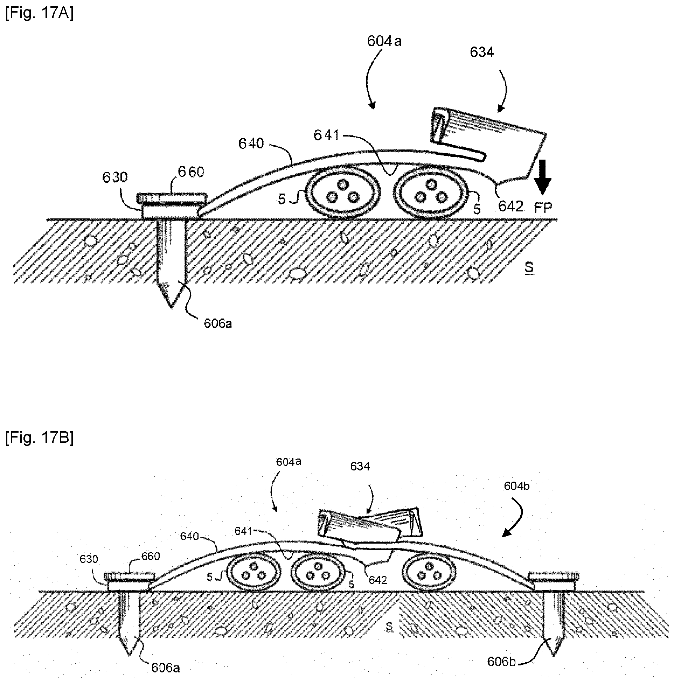

Figures 17a and 17b show a first fastener 606a and a second fastener 601b of a strip of fasteners according to another example similar to the strip 1 of fasteners 6 in Figure 1 to 4, in which similar references represent similar features incremented by 600. The first carrier 604a includes an first anchoring element 643 and the second carrier 604b includes a second anchoring element 643. Each anchoring element 643 is provided on the respective carrier 604, at a free end of its arm 640.

The anchoring elements 643 are configured to cooperatingly couple together when the first fastener 606a and the second fastener 606b are secured to a substrate S on opposing sides of an elongated piece 5. In particular, each anchoring element 643 includes a hooked portion configured to mutually engage one another when the free ends of the respective arms 640 are brought together. In this way, the cooperating anchoring elements 643 may span and hold a larger number of elongated pieces 5. The free ends of the cooperating anchoring elements 643 are restrained in a desirable position.

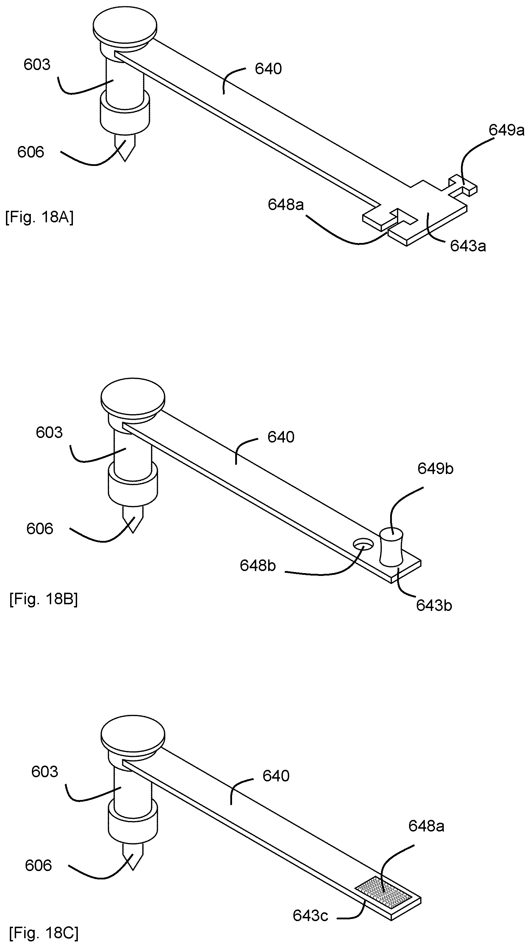

Figures 18a to 18i show a non-limiting range of carriers 604 and anchoring elements 643 for each fastener 606 of a strip of fasteners. Typically, the anchoring elements 643 are formed on an end of an arm 640. The anchoring elements 643 are configured to cooperatingly couple together. By providing a pair of carriers 604 over the elongated pieces, as shown in Figures 17a and 17b, a pair of anchoring elements 643 include formations capable of coupling to one another.

In certain examples, the anchoring element 643 includes at least one receiving formation and at least one projecting formation. In certain examples, each anchoring element 643 is moulded with both a receiving formation 648 and a projecting formation 649. The receiving formation 648 and the projecting formation 649 are integrally formed on the arm 640. In certain examples, the anchoring element 643 includes a formation capable of coupling to a matching formation. In the example of Fig. 17a and 17b, the anchoring element 643 includes a formation with a head with an elongate slot. The elongate slot is open-ended to couple to an elongate slot of a subsequent anchoring element 643.

In these ways, each fastener of the strip of fasteners has a common design but is capable of coupling either using matching anchoring elements on the fastener, or using differing anchoring elements on the fastener.

In the example of Fig. 18a, the anchoring element 643a includes a female receiving member 648a and a male receiving member 649a. Each of the female receiving member 648a and the male receiving member 649a have a matching outline shape to couple together. The female receiving member 648a and the a male receiving member 649a are disposed on opposing edges of the anchoring element 643a.

In the example of Fig. 18b, the anchoring element 643b includes a female receiving member 648b and a male receiving member 649b. The female receiving member 648b is an aperture in the anchoring element 643b. The male receiving member 649b is a protrusion on an upper surface of the anchoring element 643b, configured to be received within the aperture.

In the example of Fig. 18c, each anchoring element 643c includes a first hook and loop fastener 648a, configured to couple with a matching second hook and loop fastener to couple to each other. Each hook and loop fastener 648a is disposed a suitable surface of the anchoring element 643c to engage another anchoring element 643c.

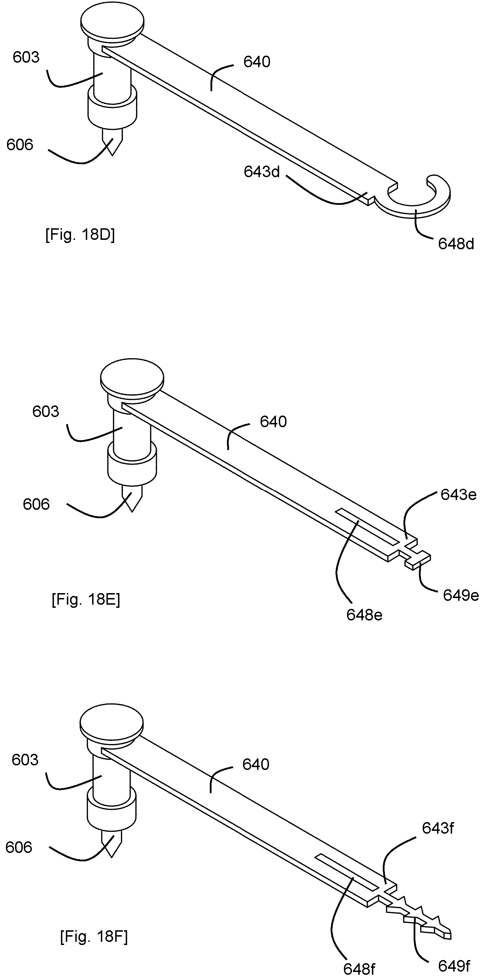

In the example of Fig. 18d, each anchoring element 643d includes a hooked element 648a, configured to couple with a corresponding hooked element. Each hooked element 648a is disposed at an end of the anchoring element 643d to engage and couple another anchoring element 643d.

In the example of Fig. 18e, the anchoring element 643e includes a female receiving member 648e and a male receiving member 649e. The female receiving member 648e is an elongate slot through the anchoring element 643e. The male receiving member 649e is a protrusion with an enlarged head, configured to be received and coupled within the elongate slot.

In the example of Fig. 18f, the anchoring element 643f includes a female receiving member 648f and a male receiving member 649f. The female receiving member 648f is an elongate slot through the anchoring element 643f. The male receiving member 649f is a barbed strip, configured to be received and coupled within the elongate slot.

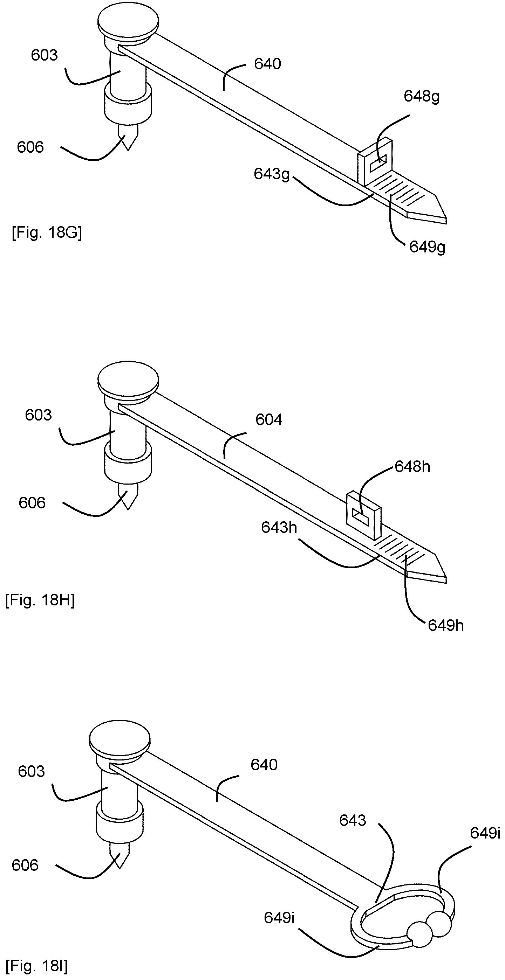

In the example of Fig. 18g, the anchoring element 643g includes a female receiving member 648g and a male receiving member 649g. The female receiving member 648g is a pawl on the anchoring element 643g. The male receiving member 649g is a strap with retaining teeth, configured to be inserted and coupled to the pawl. In the example, pawl is oriented with its slot extending across the arm 640 of the fastener. In a related example, shown in Fig. 18h, the pawl is oriented with its slot extending along the arm 640 of the fastener.

In the example of Fig. 18i, each anchoring element 643 includes a pair of arms 649i. The arms are curved to circumscribe an aperture 648i. The arms are biased against one another. A subsequent anchoring element 643 may be coupled by urging its pair of arms through the interface of the first pair of arms, into the aperture 648i.

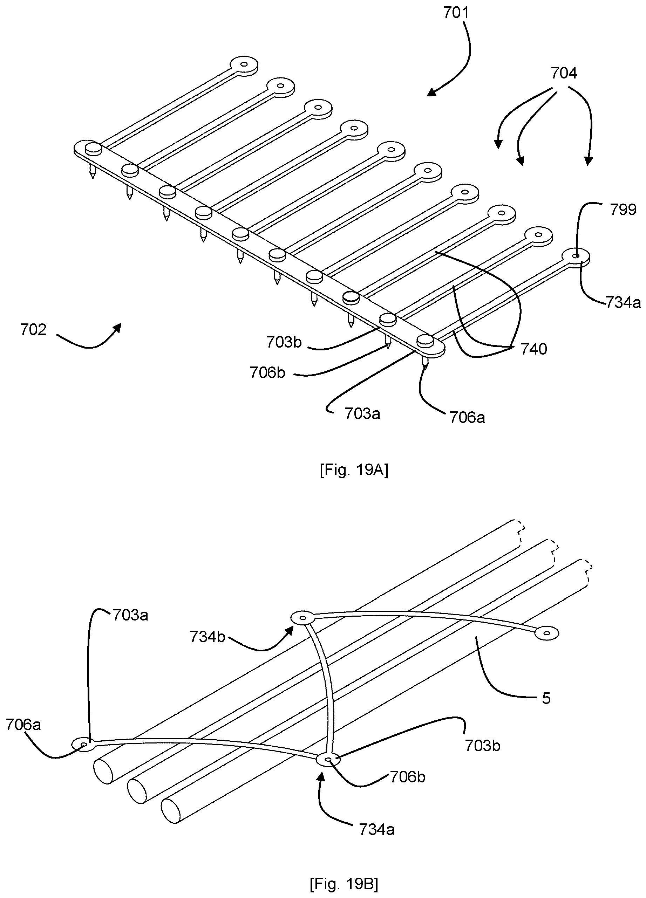

Figures 19a and 19b show a strip of fasteners 701 according to another example similar to the strip of fasteners 101 in Figure 1 to 4, in which similar references represent similar features incremented by 700. Each first carrier 701 includes a carrier 704 having an anchoring element 743. The anchoring element 743 includes an aperture 799 through the free end of its arm 740 although, as will be appreciated, the aperture 799 may be provided at other positions on the carrier.

To use the strip 701 of fasteners 706, a first fastener 706a of the strip 701 is driven into a substrate to secure the corresponding sleeve 703 and its carrier 704 to substrate. With the first fastener 706a secured to the substrate, the second fastener 706b is located within the aperture 799 associated with the first fastener 706a. The second fastener 706b is then driven into the substrate securing the second sleeve 703 as well as the first aperture 799 to the substrate. The process of securing free end is repeated for subsequent fasteners of the strip 701. In this way, the free ends of anchoring elements 743 are restrained in a desirable position in an efficient manner.

The person skilled in the art will understand that the embodiments described above can vary in many ways, provided they are consistent with the scope of the claims.

**List of Reference Numbers**

| | | | |
|---|---|---|---|
| | | 120 | breakaway connectors |
| | | 103 | sleeve |
| 1 | strip of fasteners | 130 | annular portion |
| 10 | driving tool | 131 | spaced rings |
| 2 | holder | 132 | connector |
| 20 | breakaway connectors | 104 | carrier |
| 3 | sleeve | 140 | arm |
| 30 | annular portion | 141 | concave seat |
| 31 | spaced rings | 142 | lip |
| 32 | connector | 106 | fastener |
| 4 | carrier | 160 | head |
| 40 | arm | 201 | strip of fasteners |
| 41 | concave seat | 202 | holder |
| 42 | lip | 220 | breakaway connectors |
| 43 | C-clip | 203 | sleeve |
| 5 | elongated piece | 230 | annular portion |
| 6 | fastener | 231 | spaced rings |
| 60 | head | 232 | connector |
| 101 | strip of fasteners | 204 | carrier |
| 102 | holder | 240 | arm |
| 241 | concave seat | 532 | connector |
| 243 | hooked member | 504 | carrier |
| 206 | fastener | 544 | strap |
| 260 | head | 545 | anchoring element |
| 301 | strip of fasteners | 546 | hole |
| 302 | holder | 547 | free end of strap |
| 320 | breakaway connectors | 540 | arm |
| 303 | sleeve | 506 | fastener |
| 331 | spaced rings | 560 | head |
| 332 | connector | 601 | strip of fasteners |
| 304 | carrier | 602 | holder |
| 340a | arm | 603 | sleeve |
| 340b | arm | 630 | annular portion |
| 341 | concave seat | 604 | carrier |
| 343 | C-clip | 640 | arm |
| 306 | fastener | 641 | concave seat |
| 360 | head | 642 | lip |
| 401 | strip of fasteners | 643 | anchoring element |
| 402 | holder | 648 | receiving formation |
| 403 | sleeve | 649 | projecting formation |
| 404 | carrier | 606 | fastener |
| 440 | arm | 660 | head |
| 444 | strap | 701 | strip of fasteners |
| 445 | anchoring element | 702 | holder |
| 446 | pawl | 703 | sleeve |
| 447 | teeth | 706a, 7 06b | fasteners |
| 406 | fastener | 730 | annular portion |
| 460 | head | 704 | carrier |
| 501 | strip of fasteners | 740 | arm |
| 502 | holder | 799 | aperture |
| 520 | breakaway connectors | | |
| 503 | sleeve | FP | pressing force |
| 530 | annular portion | S | substrate |
| 531 | spaced rings | | |

## Claims

1. A strip (1, 101, 201, 301, 401, 501, 601, 701) of fasteners comprising a holder (2, 102, 202, 302, 402, 502, 602, 702) with a plurality of sleeves (3, 103, 203, 303, 403, 503, 603, 703) frangibly connected between them and a carrier (4, 104, 204, 304, 404, 504, 604, 704) connected to each sleeve (3, 103, 203, 303, 403, 503, 603, 703) for holding an elongated piece (5), in which each sleeve (3, 103, 203, 303, 403, 503, 603, 703) holds a fastener (6, 106, 206, 306, 406, 506, 606, 706) so that, when the fastener (6, 106, 206, 306, 406, 506, 606, 706) is driven into a substrate (S) by a driving tool (10), the fasteners (6, 106, 206, 306, 406, 506, 606, 706) secure the sleeve (3, 103, 203, 303, 403, 503, 603, 703) and its carrier (4, 104, 204, 304, 404, 504, 604, 704) to the substrate (S).

2. The strip (601, 701) of fasteners according to claim 1, the plurality of sleeves (603, 703) comprising at least a first sleeve, holding a first fastener (606a, 706a) and having a first carrier (604, 704), and a second sleeve, holding a second fastener (606b, 706b) and having a second carrier (604, 704), wherein the first carrier (604, 704) comprises an first anchoring element (634, 734) configured so that, once the second fastener (606b, 706b) is driven into the substrate (S), the first anchoring element (634, 734) engages the second carrier (604, 704) to hold the elongated piece (5).

3. The strip (601. 701) of fasteners according to claim 2, wherein the second carrier (604, 704) comprises a second anchoring element (634. 734), and wherein the first anchoring element and second anchoring element are configured to cooperatingly couple together.

4. The strip of fasteners (601) according to claim 3, wherein the first anchoring element (634) comprises at least one receiving formation and the second anchoring element (634) comprises at least one projecting formation configured to couple with the at least one receiving formation.

5. The strip of fasteners (601) according to claim 3, wherein the anchoring elements (634) each comprise a mutually-engaging formation.

6. The strip (701) of fasteners according to claim 2, wherein the first anchoring element (734) is configured to be secured by the second fastener (706b) when the second fastener (706b) is driven into the substrate (S).

7. The strip (1, 101, 201, 301, 401, 501, 601, 701) of fasteners according to any one of claims 1 to 6, in which each carrier (4, 104, 204, 304, 404, 504, 604, 704) comprises an arm (40, 140, 240, 340a, 340b, 440, 540, 640, 740) that protrudes radially from the sleeve (3, 103, 203, 303, 403, 503, 603, 703), wherein each arm (40, 140, 240, 340a, 340b, 440, 540) is configured to fit at least partially over and/or around the elongated piece (5).

8. The strip (1, 101, 201, 301, 601) of fasteners according to claim 7, in which each arm (40, 140, 240, 340a, 340b, 640) is curved to form a concave seat (41, 141, 241, 341, 641) enabling the elongated piece (5) to be engaged.

9. The strip (1, 101, 601) of fasteners according to claim 8, in which the concave seat (41, 141, 641) of each arm (40, 140, 640) is on the side of the arm (40, 140, 640) facing the substrate (S) and the arm (40, 140, 640) is configured to exert, when in use, a pressing force (FP) to hold the elongated piece (5) against the substrate (S).

10. The strip (1, 101, 601) of fasteners according to claim 8 or claim 9, in which each arm (40, 140, 640) comprises a lip (42, 142, 642) at or near its free end and which protrudes towards the substrate (S) to laterally retain the elongated piece (5).

11. The strip (1, 201, 301) of fasteners according to any of the preceding claims, in which each carrier (4, 204, 304) comprises a hooked member (43, 243, 343) for releasably engaging the elongated piece (5).

12. The strip (1) of fasteners according to claim 11 when depending from claim 9 or claim 10, in which the hooked member (43) protrudes from the arm (40) on its side opposite the concave seat (41) to releasably engage an elongated piece (5).

13. The strip (301) of fasteners according to claim 11, in which each carrier (304) comprises a pair of curved arms (340a, 340b) which together form the hooked member (343) when the fastener (6, 106, 206, 306, 406, 506) is driven into the substrate (S).

14. The strip (1, 201, 301) of fasteners according to any of claims 11 to 13, in which the hooked portion (43, 243, 343) protrudes, when in use, away from the substrate (S) so that at least a portion of the hooked portion (43, 243, 343) is located between the elongated piece (5) and the substrate (S).

15. The strip (1, 101, 201, 301, 401, 501, 601, 701) of fasteners according to any of the preceding claims, in which the holder (2, 102, 202, 302, 402, 502, 602, 702) is molded from a polymer material and each sleeve (3, 103, 203, 303, 403, 503, 603, 703) is at least partially bendable when the fastener (6, 106, 206, 306, 406, 506, 606, 706) is driven into a substrate (S), the sleeve (3, 103, 203, 303, 403, 503, 603, 703) providing an annular portion (30, 130, 230, 530, 630, 730) trapped between a head (60) of the fastener (6, 106, 206, 306, 406, 506, 606, 706) and the substrate (S), to which the carrier (4, 104, 204, 304, 404, 504, 604, 704) is attached.
